(19) **Europäisches Patentamt European Patent Office Office européen des brevets**

(11) **EP 3 049 859 B1**

(12) **EUROPEAN PATENT SPECIFICATION**

(45) Date of publication and mention
of the grant of the patent:
**22.04.2020 Bulletin 2020/17**

(21) Application number: **14786321.1**

(22) Date of filing: **11.09.2014**

(51) Int Cl.:
*G02B 27/10* (2006.01)          *G02B 27/14* (2006.01)
*G02B 21/00* (2006.01)          *G02B 21/36* (2006.01)
*G02B 21/16* (2006.01)          *G02B 27/40* (2006.01)

(86) International application number:
**PCT/IB2014/064429**

(87) International publication number:
**WO 2015/044819 (02.04.2015 Gazette 2015/13)**

(54) **OPTICAL PRISM FOR CREATING MULTIPLE VIEWS OF AN IMAGE**

OPTISCHES PRISMA ZUR ERZEUGUNG MEHRERER ANSICHTEN EINES BILDES

PRISME OPTIQUE POUR CRÉATION DE VUES MULTIPLES D'UNE IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2013 PCT/IB2013/058894
01.04.2014 PCT/IB2014/060357**

(43) Date of publication of application:
**03.08.2016 Bulletin 2016/31**

(73) Proprietor: **Ecole Polytechnique Fédérale de
Lausanne (EPFL)
1015 Lausanne (CH)**

(72) Inventors:
• **LEUTENEGGER, Marcel
37077 Göttingen (DE)**
• **GEISSBUEHLER, Stefan
CH-4900 Langenthal (CH)**
• **LASSER, Theo
CH-1026 Denges (CH)**

(74) Representative: **Grosfillier, Philippe
ANDRE ROLAND S.A.
P.O. Box 5107
1002 Lausanne (CH)**

(56) References cited:
WO-A1-2010/042522          DE-A1-102009 047 002
GB-A- 2 346 453          US-A- 5 032 004
US-A1- 2004 156 134          US-A1- 2009 213 466
US-A1- 2010 231 922

**Description**

**Field of invention**

The present invention relates to three-dimensional (3D) imaging in microscopy and more precisely to the 3D imaging of dynamic objects.

**Background of the invention**

Three-dimensional (3D) imaging in microscopy typically requires imaging the object sequentially depth plane by depth plane along the optical axis, whereas each image contains a sharp two-dimensional (2D) representation of the lateral object features in the conjugated object plane. This sequential imaging along the optical axis is applicable for 3D imaging of a static object. However, if the object is changing its shape, is moving or is modifying its properties during imaging, a distorted or malformed 3D representation is obtained. To solve this problem the 3D object is simultaneously imaged in several object planes. For this purpose, the image of the object is distributed on several frames arranged side-by-side on one or several camera sensors, whereas each frame looks at a different object plane.

For instance, super-resolution optical fluctuation imaging (SOFI) analyzes the spatio-temporal fluctuations of the light from the object in order to obtain a spatially super-resolved image. For SOFI, the point spread function (PSF: image of a point source) is detected simultaneously by several pixels on a camera sensor. SOFI analyzes then the spatio-temporal correlations of intensity fluctuations among these pixels for increasing the spatial resolution beyond the optical resolution of the microscope. SOFI assumes that the intensity fluctuations among individual sources are not correlated - they are to be stochastic and independent which also renders their intensity variations irreproducible. Hence, a reliable 3D imaging of such stochastic fluctuations requires the simultaneous imaging of several adjacent object planes for avoiding differences due to stochastic variations in the fluctuation patterns.

Super-resolution microscopy often exploits the blinking of the fluorescence emission of fluorophores. A fluorophore is a small organic molecule or a protein that emits light if irradiated. Upon illumination, a fluorophore absorbs photons, gets exited and reemits photons at a different wavelength. Fluorophores are imaged in fluorescence microscopy which is widely used for investigating biological samples. Fluorescence microscopy has great advantages as there are specificity, high contrast and sensitivity, and multi-color imaging. Specificity is achieved by a selective fluorescent labeling of a non-fluorescent target (e.g. antibody staining with a fluorophore) or by making cells express genetically modified proteins containing a fluorescent protein. The high contrast is achieved by spectrally filtering the detected light such that only the fluorescence emission shows up in the image. In combination with the bright emission of fluorophores, fluorescence microscopy achieves single-molecule sensitivity. These features are readily exploitable at several colors by labeling different targets with fluorophores of spectrally distinct emission.

For such multi-color imaging, SOFI can exploit the stochastic fluctuations of the fluorescence emission of several fluorophore species even in the case of overlapping emissions. Similar to the increased spatial sampling in 3D imaging, exploiting the joint correlations between channels in multi-color SOFI increases the spectral sampling but requires several color channels to be taken simultaneously [own patent application PCT/IB2012/051581 "Cumulant Microscopy" pending].

Whereas the stochastic fluctuations of the light emitted by the object are exploited and highly welcome for super-resolution microscopy, fluctuations due to changes (i.e. drifts) in the microscope's imaging path are to be avoided. Therefore, a robust and reliable method for imaging multiple object planes and/or multiple colors is required (that is for instance insensitive to mechanical vibrations and/or thermal dilation but not limited hereto) such that the potential of stochastic super-resolution methods can be fully exploited.

US2010231922 discloses that a statistically sparse subset of switchable optical sources in a sample is activated, and the activated switchable optical sources are excited such that optical beams are emitted from the activated switchable optical sources along at least two optical paths. A first wavefront modification in a first optical beam emitted from the activated switchable optical sources along a first optical path is introduced and a second wavefront modification in a second optical beam emitted from the activated switchable optical sources along a second optical path is introduced, the second wavefront modification being distinct from the first wavefront modification. The first and second optical beams are interfered with each other to produce a plurality of output beams, and three-dimensional position information of the optical sources is determined based on an intensity of each output beam from the plurality of output beams.

US2009213466 discloses a beam splitter apparatus that comprises a beam splitter and a plurality of prisms disposed about the beam splitter. The beam splitter apparatus is configured to split an incident laser beam into a plurality of beamlets exhibiting substantially equal energy and traversing substantially equal optical path lengths through the beam splitter apparatus.

US5032004 discloses an optical device for splitting an imaging light beam into at least three spacially and spectrally separated component beams which includes a plurality of surface pairs. Each of the surface pairs includes a first surface and a second surface. The first surface of each of the surface pairs is adapted to reflect a different one of the component beams. The second surface of each said surface pairs is adapted to reflect all of the component beams except for the component beam reflected by the associated first surface. A method for optimizing the performance of such an optical device is also disclosed.

GB2346453 discloses a beam splitting device for a laser beam that comprises a partially reflecting inner mirror splitting the beam into a partial beams, which depart from the device in one plane, and having constant transmission, and two high reflectivity outer mirrors on either side of the inner mirror. The inner mirror transmits the beam to one of the outer mirrors and reflects the beam to the other outer mirror with substantially equal attenuation, and then repeatedly transmits the beam to one of the outer mirrors and reflects it to the other one of the outer mirrors. The inner mirror is disposed at different spacings from the outer mirrors and/or the latter are tilted with respect to the former so that beams reflected by the inner mirror do not coincide with beams reflected by the outer mirrors. At the exit region of the device, the end of the inner mirror is displaced forwardly of the end of one of the outer mirrors and rearwardly of the end of the other outer mirror. A two dimensional array of partial beams may be formed using two of the above devices optionally with a periscope between them.

WO2010042522 discloses an optical system, in particular for endoscopic applications, which uses wavelength-compensating optical components, in particular prisms, made of materials with different inter-element coatings and refractive indices to image significantly different wavelength-ranges (VIS and NIR) onto the same image plane of an image acquisition device, such as a CCD sensor.

US2004156134 discloses that in order to obtain a beam splitting prism with which a beam can be split with simpler configuration in a state in which an optical path length is precisely controlled, there is provided a beam splitting prism having an incident and an outgoing faces orthogonal or parallel to each other, wherein transparent mediums, at least one beam splitter, and at least one reflector are combined so that the beam splitter and the reflector are located between the transparent mediums, the beam splitter and the reflector are arranged whose normal directions are orthogonal to each other, whereby a beam incident from an incident end face is outputted from an outgoing end face in the form of a plurality of split output beams.

DE102009047002 discloses a splitter that has two prisms, which comprise four respective sides. The splitter is arranged in a beam path of a laser beam emitted by an optical resonator. The prisms are connected by an optical boundary layer forming a flat level. The optical boundary layer separates different polarizations of the laser beam, where one of the polarizations is transmitted and the other polarization is reflected. The sides of the prisms are arranged parallel pair-wise to each other. A pair of side surfaces is arranged parallel to the optical boundary layer.

### Summary of the invention

The present invention concerns a microscope system according to claim 1. Further advantageous features can be found in the dependent claims. The present disclosure refers to a versatile image splitter concept that is based on the use of at least one particularly shaped image splitting prism. Several prisms may also be used and combined to form a unique rigid solid body. Thereby, the image splitting becomes insensitive to environmental influences, which helps avoiding the repeated alignment of opto-mechanical setups whose many parts tend to misalign over and over again.

### Detailed description of the invention

The invention will be better understood in the detailed description below which also includes illustrated examples. Of course the invention is not limited to those examples.

Brief description of the figures

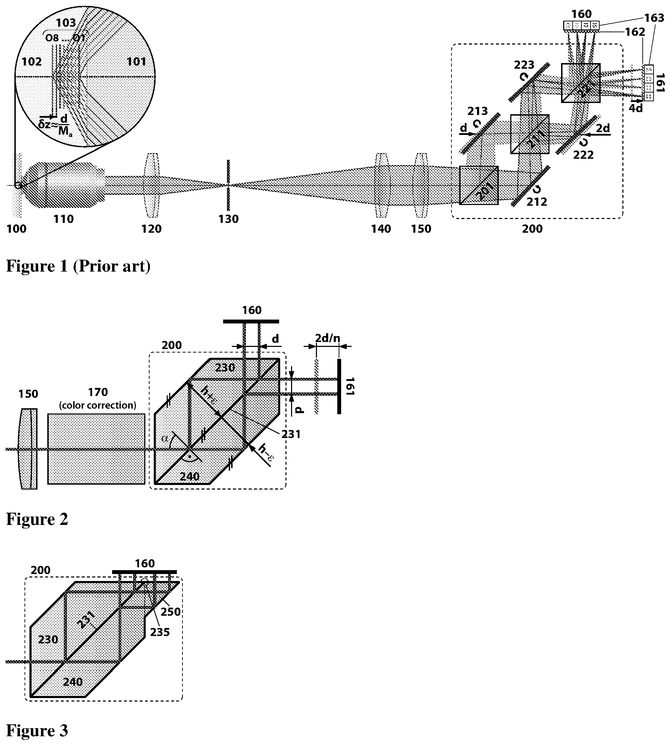

**Figure 1 (Prior art)** I Widefield microscope for imaging simultaneously eight object planes **103** by two cameras **160** and **161.** These object planes **01...08** are obtained by splitting the light from the sample **102** into several channels using three 50:50 beam splitter cubes (**201;211;221**) and by introducing path length differences $d$ and $2d$ with the mirrors (**212,213;222,223**), as well as $4d$ with camera **161** (the grey-shaded element positions would result in a single detection channel). The resulting separation between the object planes **103** in the sample space **102** is then approximately $\delta z = d/M_a$, with $M_a$ the axial magnification of the system. The images **163** of the object planes **103** are projected side-by-side on the cameras in the image planes **162**. A field stop **130** in the intermediate image prevents overlaps between the image frames **I1...I8.** The first beam splitter cube **201** can be replaced by a dichroic mirror to record two colors at four object planes **103** each.

Microscope system: **100:** object; **101:** cover slip/immersion medium; **110:** microscope objective; **120:** tube lens;

**130:** intermediate image plane with field stop; **140,150:** achromatic lenses of relay system; **200:** image splitter; **160,161:** cameras.

**Figure 2** I 2×2 image splitter prism **200** made of two plane parallel prisms **230** and **240**. The images on the cameras **160** and **161** are laterally displaced by a distance $d$, which corresponds to a shift of the image plane of $\Delta z = d/n$, where $n$ is the refractive index of the prism **200**. The conjugated object planes in the sample are separated by a distance $\delta z \approx \Delta z/M_a$, with $M_a$ the axial magnification of the optical system. An achromatic lens **150** and a glass cylinder **170** exemplify a color-corrected focusing optics matched with the image splitter prism **200.**

**Figure 3** I 1×4 image splitter prism obtained from the 2×2 image splitter prism (Figure 2) by collecting all output images to one side. **230:** plane parallel prism; **231:** splitting interface, cemented; **235:** critical edge of splitting interface; **240:** plane parallel prism; **250** right angle prism.

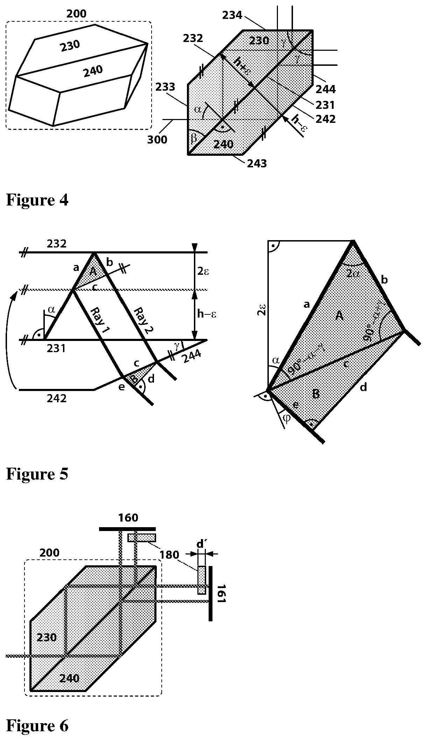

**Figure 4** I Design parameters of a 2×2 image splitter prism **200**. Typically, the incidence angle $\alpha$ is equal to the cut angles $\beta$ and $\gamma$, such that the chief rays **300** can enter (**233** and/or **243**) and leave (**234,244**) the image splitter prism at normal incidence, which leaves the replicated images undistorted.

**Figure 5** I Calculation of the image separation $d$ and the image distance difference $\Delta z$ based on the design parameters shown in Figure 4. **231:** splitting interface; **232:** prism **230** reflector at h+ε distance from **231; 242:** prism **240** reflector at h-ε distance from **231; 244:** exit surface.

**Figure 6** I Adjustment of the image distance difference with optical flats **180** placed in front of the camera sensors **160** and **161** such that all beams of an image frame travel through the corresponding optical flat. **200:** 2×2 image splitter prism made of two plane parallel prisms **230** and **240.**

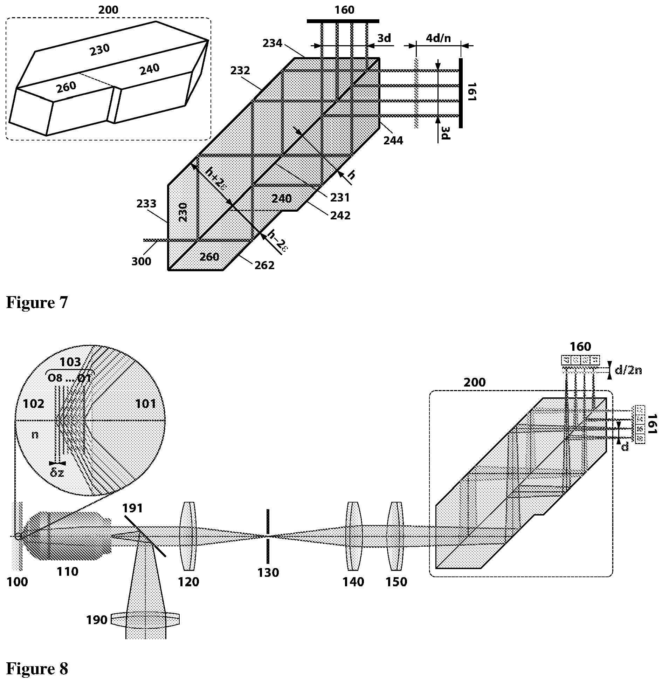

**Figure 7** I 2×4 image splitter prism **200**. The images on the cameras **160** and **161** are laterally displaced by a distance $d$, which corresponds to a shift of the object plane of $\Delta z = d/n$, where $n$ is the refractive index of the prism. Alternating the images of the conjugated object planes between the cameras requires a displacement of the camera **161** by only $d/2n$ and results in $\Delta z = d/2n$. The conjugated object planes in the sample are separated by a distance $\delta z = \Delta z/M_a$, with $M_a$ the axial magnification of the system. **230,240:** plane parallel prisms; **260:** rhomboid prism; **231:** splitter interface; **232,242,262:** reflecting surfaces; **233:** entrance surface; **234,244:** exit surfaces.

**Figure 8** I Concept of a multiplane epi-illumination microscope applying a 2×4 image splitter prism. The object planes **O1...O8** are imaged in the image frames **I1...I8**. The camera displacement of $d/2n$ sets up a distance of $\delta z = d/(2nM_a)$ between the object planes, where $n$ is the refraction index in the sample and $M_a$ is the axial magnification of the imaging optics. Therefore, the image frames are interleaved such that **I1, I3, I5** and **I7** are imaged on camera **160** and **I2, I4, I6** and **I8** are imaged on camera **161.**
**100:** object; **101:** cover slip; **102:** sample; **103:** object planes **O1...O8; 110:** microscope objective; **120:** tube lens; **130:** intermediate image plane with field stop; **140,150:** achromatic lenses of relay system; **190:** illumination optics; **191:** dichroic or semi-transparent mirror; **200:** image splitter prism.

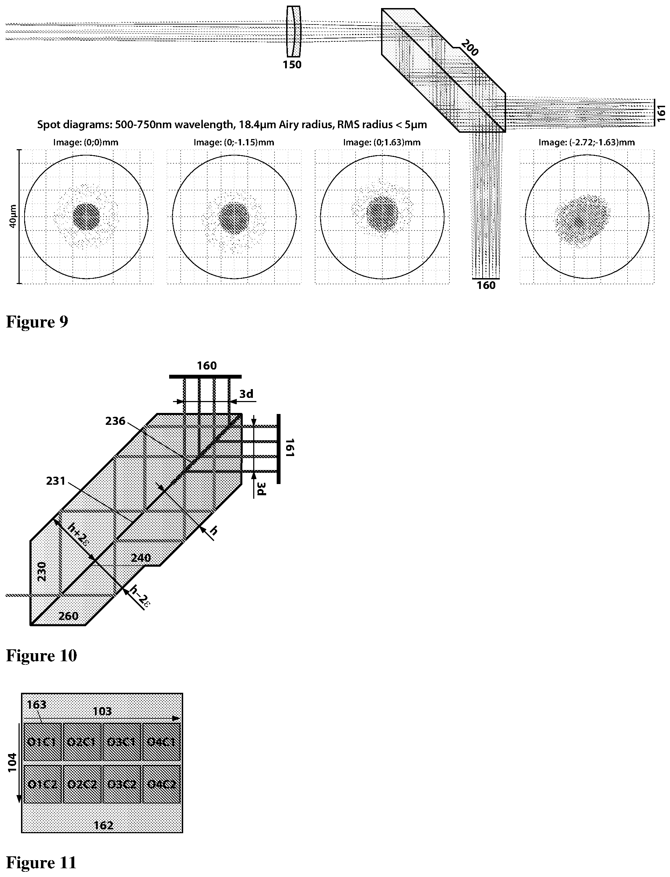

**Figure 9** I Ray tracing through a 2×4 image splitter prism. The custom achromatic lens **150** corrects for longitudinal chromatic aberration of the optical system and the image splitter prism **200**. Red and green rays trace the beams from marginal field points, whose images line up on the camera sensor in the image frames 1 to 4 on camera **160** and 5 to 8 on camera **161**. The spot diagrams show that the optical system is diffraction-limited over the entire field for the wavelength range from 500nm to 750nm and for all image frames (overlaid; referenced to chief rays).

**Figure 10** I Multi-color 2×4 image splitter prism creating four object planes in two colors each by placing a bifacial dichroic interface **236** for the last image split. In this embodiment, the cameras **160** and **161** are placed at identical distances. The general outline of the splitter prism is identical to the 2×4 image splitter prism shown in Figure 7 made of two plane-parallel prisms **230** and **240** and a rhomboid prism **260.**

**Figure 11** I Potential image frame **163** arrangement in four columns and two rows on the camera sensor **162** (gray area) for imaging four different object planes **103** (**O1...O4**) of a sample in two color channels **104** (**C1** and **C2**).

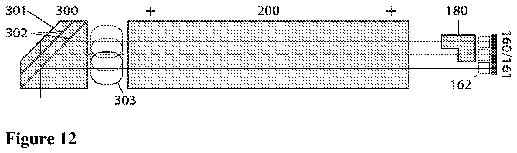

**Figure 12** I Compact implementation of a tricolor multiplane image splitter satisfying all requirements [0021]. The tricolor splitter **300** is composed of a right angle prism and two plane-parallel plates. Two bifacial dichroic interfaces **302** and a reflector **301** split the light into spectral channels. By overlapping the beam footprints **303,** the prism dimensions (**180**, **200** and **300**) can be minimized. The image distance differences between the spectral channels can be compensated by optical flats **180** in front of the camera sensors **160/161** such that the image frame footprints **162** are transmitted through distinct thicknesses of **180.**

Terms and definitions

   **3D:** Three-dimensional.

   **PSF:** Point spread function, i.e. the image of a point object.

   **SOFI:** Super-resolution optical fluctuation imaging [T. Dertinger, R. Colyer, G. Iyer, S. Weiss, J. Enderlein, "Fast, background-free, 3D super-resolution optical fluctuation imaging (SOFI)," Proc. Nat. Acad. Sci. USA 106, 22287-22292 (2009); T. Dertinger, R. Colyer, R. Vogel, J. Enderlein, S. Weiss, "Achieving increased resolution and more pixels with Superresolution Optical Fluctuation Imaging (SOFI)," Opt. Express 18, 18875-18885 (2010)].

   **Depth plane, object plane:** Plane in the sample space that is conjugated to the image plane.

   **Color channel:** Image frame with a wavelength dependent sensitivity, i.e. an image frame recording spectrally filtered light.

Simple non-polarizing beam or image splitters are well-known elements. A beam splitter cube produces a reflected and a transmitted image by passing the beam through a partially reflective tilted interface. Two beam splitter cubes are arranged such that both beams produced by the first splitter **201** overlap on the partially reflective interface of the second splitter **211.** By complementary tilts of the mirrors **212** and **213** in the two arms, $2\times 2$ output beams can be obtained. As shown in Figure 1, these output beams can be mirrored again on the partially reflective interface of a third beam splitter **221.** Suitable tilts of the mirrors **222** and **223** then result in $2\times 4$ output beams. This scheme can be repeated to get $2\times 2^{m-1}$ output beams, where $m$ is the number of beam splitter cubes.

Figure 1 outlines a multiple image splitter **200** made of individual optical and mechanical components, which allows full flexibility of choosing the alignment of the image frames and the distances between the object planes. In practice, this flexibility quickly becomes a nuisance because it asks for a careful alignment and easily suffers from drift due to thermal variations or mechanical vibrations.

By implementing the beam splitters **(201;211;221)** and the mirrors **(202,203;212,213)** as a unique solid image splitter prism, the sensitivity against environmental influences is greatly reduced and the alignment of the instrument is simplified. For instance, Figure 2 shows a $2\times 2$ image splitter prism **200** made of two cemented plane parallel prisms **230** and **240** with sides cut at $\alpha = 45°$. The common interface **231** serves as non-polarizing 50:50 beam splitter. The two prisms have a height $h \pm \varepsilon$ with a difference of $2\varepsilon = d / \sqrt{2}$, which results in a lateral shift of $d$ between the images on the camera sensors **160** and **161.** In this configuration, the lateral shift is identical to the geometrical path length difference of the beams inside the prism **200.** This results in an image distance difference $\Delta z = d/n$ in the focused beams, where $n$ is the refractive index of the prism. The object planes in the sample are therefore separated by a distance of $\delta z \approx \Delta z/M_a$, where $M_a = M_t^2$ is the axial magnification of the system and $M_t$ is its lateral magnification. In the direction of the separation, the image frame separation $d$ limits the field of view (FOV) to at most $d/M_t$ for non-overlapping frames. The object plane separation and the image frame separation are related. Their ratio can be adjusted by the lateral magnification $M_t$ of the system, by the refractive index $n$ of the prism and by the incidence angle $\alpha$ on the splitting interface (c.f. paragraphs [0014] and [0015]).

The image splitter prism **200** introduces spherical aberration. But at the low numerical aperture in the imaging path, the aberration is usually insignificant. We found that it can compensate the residual spherical aberration of the microscope optics (**100...150**). Furthermore, for white light image splitting, the image splitter prism causes lateral chromatic aberration (lateral color) in case of non-normal incidence of the beams on the prisms' input and output faces, which can be used to compensate the lateral color of the microscope optics. In combination with a glass cylinder **170** of a different material, the axial chromatic aberration (axial color) can be reduced too. In another embodiment, a customized lens **150** can provide these chromatic corrections. Therefore, the image splitter prism can be matched to the microscope optics such that these aberrations are minimized.

A variant of the image splitter prism **200** is shown in Figure 3, where all images are projected on one camera sensor **160** by an additional right angle prism **250.** This embodiment is particularly interesting if the camera sensor can be approached closely to the exit surface, such that vignetting or scattering of the beams at the edge **235** of the splitter interface **231** on the exit surface is minimized.

Figure 4 illustrates the general outline of a 2×2 image splitter prism. The image splitter prism **200** is made of two cemented prisms **230** and **240**, whose cemented surface **231** - the base - serves as light splitter and whose parallel external surfaces **232** and **242** serve as reflectors. The external surfaces **232** and **242** shall be parallel to the base **231** at distances of $h + \varepsilon$ and $h - \varepsilon$ from said base. The entrance side **233** of one prism is cut at an angle $\beta$ with respect to its base and the exit sides **234** and **244** of the prisms **230** and **240**, respectively, are cut at an angle $\gamma$ with respect to the base. The lengths and the thicknesses of the prisms are chosen such that each beam **300** encounters the base twice without vignetting when passing the beams through the image splitter prism.

The calculation of the image separation $d$ and the image distance difference $\Delta z$ is shown in Figure 5. Mirroring the external surfaces **232** and **242** to one side of the base **231** and ignoring the common paths, the chief ray 2 travels a distance $a + b$ further in the prism **230** and a distance $e$ less in the air than the chief ray 1 (the camera is aligned for normal incidence of these rays). The edges of triangle A are

$$a = \frac{2\varepsilon}{\cos(\alpha)}, \quad b = a\frac{\cos(\alpha+\gamma)}{\cos(\alpha-\gamma)} \quad \text{and}$$

$$c = a\frac{\sin(2\alpha)}{\cos(\alpha-\gamma)}.$$

The exit angle $\varphi$ is obtained by Snell's law $\sin(\varphi) = n\sin(\alpha-\gamma)$, where $n$ is the refractive index of the prism. The air distance is then $e = c \sin(\varphi) = a \sin(2\alpha)n \tan(\alpha-\gamma)$. Therefore, the image distance differs in total by

$$\Delta z = \frac{a+b}{n} - e = \frac{2\varepsilon}{\cos(\alpha)}\left(\frac{1}{n} + \frac{\cos(\alpha+\gamma)}{n\cos(\alpha-\gamma)} - n\sin(2\alpha)\tan(\alpha-\gamma)\right).$$

The image separation evaluates finally to

$$d = c\cos(\varphi) = \frac{2\varepsilon}{\cos(\alpha)}\frac{\sin(2\alpha)}{\cos(\alpha-\gamma)}\sqrt{1-n^2\sin^2(\alpha-\gamma)}.$$

For $\gamma = \alpha$, the chief rays pass the exit side **244** at normal incidence. Hence, they are not deviated and the relations

$$\Delta z = \frac{2\varepsilon}{n\cos(\alpha)}(1+\cos(2\alpha)) \quad \text{and} \quad d = \frac{2\varepsilon}{\cos(\alpha)}\sin(2\alpha).$$

simplify to For $\gamma = \alpha = 45°$, we find the previous results

of $\Delta z = d/n$ with $d = 2\varepsilon\sqrt{2}$ (c.f. paragraph [0011]).

As shown in paragraph [0015], the image separation $d$ and the prism geometry define the image distance difference $\Delta z$. By alternating the images of the conjugated object planes between two cameras (similar to Figure 10), $\Delta z$ can be reduced by half by displacing the camera sensor **161** in Figure 2 only by $\Delta z = d/2n$ with respect to the camera sensor **160** (such an embodiment is shown in Figure 8). If further required, the image distance difference $\Delta z$ can be adjusted by placing optical flats (plane-parallel glass plates) of different thicknesses in front of the camera sensors. As shown in Figure 6 for the case of a 2×2 image splitter **200**, an optical flat **180** covering the area of an image frame allows to introduce an additional image distance difference $\Delta z' = (1 - n')d'$, where $n'$ is the refractive index of the flat and $d'$ its thickness. Because all beams of an image frame should travel only through the corresponding optical flat, the optical flats have to be aligned carefully and are preferably placed as close to the camera sensor as possible. Fixing the optical flats on the exit surfaces of the image splitter prism is possible but would require a larger unused area between image frames.

This concept of an image splitter prism **200** can be extended to $2\times2^m$ output beams by reflecting the beams $m$ times back on the splitter interface **231**, whereas the thickness difference of the two plane parallel prisms is $\varepsilon 2^k$ for the $k \in 1,...,m$ internal back-reflections to the splitter interface. These thickness differences can be applied in any order. Therefore, the order can be optimized for passing the focused beams through the prism whilst keeping the prism small. Figure 7 exemplifies a 2×4 image splitter prism **200**, which is composed of three cemented prisms - two plane parallel prisms **230** and **240** and a rhomboid prism **260** - with corresponding thickness differences of $2\varepsilon$ and $4\varepsilon$.

Figure 8 outlines the concept of a multiplane microscope and Figure 9 exemplifies the performance of its 2×4 image splitter prism designed for an image sensor with an 13.3×13.3mm² large sensor array. An image distance $d =$

3.3mm allows to detect four object planes with an image field of ~3.2mm along the splitting direction. The defocus in the image space is $\Delta z = d/n \approx 2.1$mm, which is -1% of the 200mm focal length of the lens. When stepping through the object planes, the marginal field points in the images shift by a few percent of the PSF diameter only as exemplified by the strong overlap of the diffraction-limited spot diagrams in Figure 9. This allows analyzing the images by a 1:1 correspondence of the pixels in the image frames of adjacent object planes.

The image splitter prism can be extended for multi-color imaging by placing a bifacial dichroic interface **236** for the last image split. As shown in Figure 10, the image splitter prism then splits the images on both cameras **160** and **161** by interleaving the colors. Because the focal distances to the sensors cannot be adjusted individually for each color in this embodiment, the axial color of the system should be well compensated. This color correction can be achieved by a customized achromatic lens **150** and/or a dispersion compensating glass rod **170**.

The color splitting can be achieved with more flexibility by dedicated optics. It is particularly useful to arrange the color channels 104 in an orthogonal direction to the image frames **163** of the different object planes **103**. Thereby, the camera sensor area **162** could be used more effectively as illustrated by Figure 11. A column of image frames would then contain all color channels of one object plane, whereas each row would contain the image frames conjugated to different object planes for one color channel.

For this application, the color splitter should fulfill the following requirements:

1. The color splitting introduces neither any image distance difference nor any mutual tilt of the image fields on the camera sensor.

2. For an efficient use of the sensor area, the spectrally distinct image frames should be projected close together on the camera sensor.

3. The color splitting should yield identical results on both cameras.

4. The color splitter should not introduce significant optical aberrations to conserve the high optical performance of the image splitting prism.

Referring to the patent by Michael J. Steinle, "Beam splitter/combiner with path length compensator," EP0447644A1, US5040872A, JP3026626B2 (1991), is has been found that partially overlapping beam footprints **303** at the color splitter output provide a compact solution (Figure 12). The color splitter **300** introduces an image distance difference that can be compensated by corresponding optical flats **180** in front of the camera sensors **160** and **161**. Overlapping the footprints **303** of the color channels reduces the overall beam footprint in the splitting prisms **300** and **200** and minimizes the image distance difference, which reduces the thicknesses of the compensating optical flats **180**. The alignment constraints can be relaxed by an extra gap between the image fields **162** of the color channels. In this geometry, the color splitter **300** could be used in a slider to quickly select among different color splitting spectra. If the third requirement [0021] is less important, two color splitters could be placed in front of the camera sensors and the compensating optical flats could be fixed on them to form rigid bodies.

In a further application, the image splitter, without or in combination with the color splitter, can be used to image a coherent light field in multiple image planes for extracting quantitative phase information of the object light field. For instance but not limited hereto, the retardation of the optical phase of light transmitted through a sample can be quantified by measuring the image intensity in several planes and by solving the transport-of-intensity equation (TIE) linking the image intensity distributions in these planes [M. R. Teague, "Irradiance moments: their propagation and use for unique retrieval of phase," J. Opt. Soc. Am. 72: 1199-1209 (1982); T. E. Gureyev, A. Roberts, K. A. Nugent, "Phase retrieval with the transport-of-intensity equation: matrix solution with use of Zernike polynomials," J. Opt. Soc. Am. A 12: 1932-1941 (1995)]. This quantitative phase imaging can be integrated easily with 3D imaging, for instance by exciting a fluorescent sample in trans-illumination and by splitting the induced fluorescence from the transmitted coherent excitation light by a color splitter. This implementation allows imaging a sample in both modalities without any moving parts - hence with maximal stability for flawless correlative imaging.

**Claims**

1. Microscope system **characterized in that** it comprises an optical image splitter prism (200) adapted to be used for the three-dimensional or phase imaging of objects, said prism (200) being made of at least two plane parallel prisms (230,240,260) combined to form a unique rigid solid body, the combined at least two plane parallel prisms comprising at least two external parallel and reflecting surfaces (232,242,262), one internal common interface (231), parallel to said surfaces (232,242,262) and acting as a non-polarizing 50:50 beam splitter; said prism (200) furthermore comprising a beam entrance side (233) forming an angle $\beta$ with respect to said interface (231) and two beam exit sides (234,244) forming an angle $\gamma$ with respect to said interface (231), wherein the thicknesses of said at least two parallel prisms (230,240,260), that is the distances of the external reflecting surfaces (232,242,262) from the splitter interface (231), differ by $\varepsilon 2^k$ to generate a plurality of non-overlapping laterally shifted images from a converging beam entering through the beam entrance side (233) such that images in a plurality of image planes can be acquired simultaneously, whereas $\varepsilon > 0$, $k = 1...m$; $m$ representing the number of internal back reflections of a beam to said interface (231).

2. Microscope system according to claim 1, further including at least one lens for providing the converging beam to the beam entrance side (233), the optical image splitter prism (200) being located between the at least one lens and the plurality of image planes.

3. Microscope system according to claim 2, further including a microscope objective (110) and a tube lens (120), as well as a field stop (130) located at an intermediate image plane and between (i) the microscope objective (110) and the tube lens (120) and (ii) the optical image splitter prism (200).

4. Microscope system according to claim 3, further including achromatic lenses (140, 150) of a relay system located between the field stop (130) and the optical image splitter prism (200).

5. Microscope system according to claim 1 wherein said prisms (230,240,260) are fixed to each other, the fixing surface forming said interface (231).

6. Microscope system according to claim 1 to 5, wherein the optical image splitter prism (200) comprises a third external parallel and reflecting surface (262) located at a distance, from said interface (231), which differs from the distance of the two other external parallel and reflecting surfaces (232,242).

7. Microscope system according to claim 6 wherein the distance of said third surface (262) is the shortest with respect to the distances of the two other external parallel and reflecting surfaces (232,242).

8. Microscope system according to claim 7, wherein optical image splitter prism (200) comprises a rhomboid prism (260) that comprises said third surface (262) and said one internal common surface (231).

9. Microscope system according to anyone of the previous claims combined with at least two cameras (160,161) oriented each in front of an exit side (234,244).

10. Microscope system according to anyone of previous claims 1 to 8 combined with a single camera (160,161) oriented in front of an exit side (234,244) and adapted to capture the signals of at least two parallel beams.

11. Microscope system according to anyone of the previous claims combined with a glass cylinder (170) made of a material which differs from the prism material, said glass cylinder (170) being positioned in a way as to reduce the axial chromatic aberration.

12. Microscope system according to anyone of the previous claims comprising a bifacial dichroic interface (236).

13. Microscope system according to anyone of the previous claims, wherein the optical image splitter prism (200) comprises a right-angle prism (250) to deliver all beams to one beam exit side (234,244).

14. Use of the microscope system as defined in anyone of the previous claims for the simultaneous acquisition of (i) coherent images in several image planes for the extraction of quantitative phase information and (ii) incoherent images in several image planes for 3D super-resolution imaging.

**Patentansprüche**

1. Mikroskopsystem, **dadurch gekennzeichnet, dass** es ein optisches Bildteilerprisma (200) umfasst, das ausgelegt ist zur Verwendung für die dreidimensionale oder Phasenbildgebung von Objekten, wobei das Prisma (200) aus mindestens zwei planparallelen Prismen (230, 240, 260) besteht, die kombiniert sind, um einen spezifischen starren festen Körper zu bilden, wobei die kombinierten mindestens zwei planparallelen Prismen mindestens zwei externe parallele und reflektierende Oberflächen (232, 242, 262), eine interne gemeinsame Grenzfläche (231), parallel zu den Oberflächen (232, 242, 262) und als nichtpolarisierender 50:50-Strahlteiler wirkend, umfassen, wobei das Prisma (200) weiterhin eine Strahleintrittsseite (233) umfasst, die einen Winkel $\beta$ bezüglich der Grenzfläche (231) bildet, und zwei Strahlaustrittsseiten (234, 244), die einen Winkel $\gamma$ bezüglich der Grenzfläche (231) bilden, wobei die Dicken der mindestens zwei parallelen Prismen (230, 240, 260), das heißt die Distanzen der externen reflektierenden Oberflächen (232, 242, 262) von der Teilgrenzfläche (231), um $\varepsilon 2^k$ differieren, um mehrere nicht überlappende lateral verschobene Bilder aus einem durch die Strahleintrittsseite (233) eintretenden konvergierenden Strahl zu generieren, so dass Bilder in mehreren Bildebenen gleichzeitig erfasst werden können, wohingegen $\varepsilon > 0$, $k = 1 \dots m$, wobei $m$ die Anzahl von internen Rückreflektionen eines Strahls zu der Grenzfläche (231) darstellt.

2. Mikroskopsystem nach Anspruch 1, weiterhin enthaltend mindestens eine Linse zum Liefern des konvergierenden Strahls an die Strahleintrittsseite (233), wobei sich das optische Bildteilerprisma (200) zwischen der mindestens einen Linse und den mehreren Bildebenen befindet.

3. Mikroskopsystem nach Anspruch 2, weiterhin enthaltend ein Mikroskopobjektiv (110) und eine Tubuslinse (120) sowie eine Feldblende (130), die sich an einer dazwischenliegenden Bildebene und zwischen (i) dem Mikroskopobjektiv (110) und der Tubuslinse (120) und (ii) dem optischen Bildteilerprisma (200) befindet.

4. Mikroskopsystem nach Anspruch 3, weiterhin enthaltend achromatische Linsen (140, 150) eines Übertragungssystems, das sich zwischen der Feldblende (130) und dem optischen Bildteilerprisma (200) befindet.

5. Mikroskopsystem nach Anspruch 1, wobei die Prismen (230, 240, 260) aneinander fixiert sind, wobei die Fixieroberfläche die Grenzfläche (231) bildet.

6. Mikroskopsystem nach Anspruch 1 bis 5, wobei das optische Bildteilerprisma (200) eine dritte, in einer Distanz von der Grenzfläche (231) angeordnete externe parallele und reflektierende Oberfläche (262) umfasst, die von der Distanz der beiden anderen externen parallelen und reflektierenden Oberflächen (232, 242) differiert.

7. Mikroskopsystem nach Anspruch 6, wobei die Distanz der dritten Oberfläche (262) bezüglich der Distanzen der beiden anderen externen parallelen und reflektierenden Oberflächen (232, 242) die kürzeste ist.

8. Mikroskopsystem nach Anspruch 7, wobei das optische Bildteilerprisma (200) ein Rhomboidprisma (260) umfasst, das die dritte Oberfläche (262) und die eine interne gemeinsame Oberfläche (231) umfasst.

9. Mikroskopsystem nach einem der vorhergehenden Ansprüche kombiniert mit mindestens zwei jeweils vor einer Austrittsseite (234, 244) orientierten Kameras (160, 161).

10. Mikroskopsystem nach einem der vorhergehenden Ansprüche 1 bis 8 kombiniert mit einer vor einer Austrittsseite (234, 244) orientierten und zum Erfassen der Signale von mindestens zwei parallelen Strahlen ausgelegten einzelnen Kamera (160, 161).

11. Mikroskopsystem nach einem der vorhergehenden Ansprüche kombiniert mit einem Glaszylinder (170), der aus einem Material besteht, das von dem Prismamaterial differiert, wobei der Glaszylinder (170) so positioniert ist, dass die axiale chromatische Aberration reduziert wird.

12. Mikroskopsystem nach einem der vorhergehenden Ansprüche, umfassend eine zweiseitige dichroitische Grenzfläche (236).

13. Mikroskopsystem nach einem der vorhergehenden Ansprüche, wobei das optische Bildteilerprisma (200) ein rechteckiges Prisma (250) umfasst, um alle Strahlen an eine Strahlaustrittsseite (234, 244) zu liefern.

14. Verwendung des Mikroskopsystems, wie in einem der vorhergehenden Ansprüche definiert, für die simultane Erfassung von (i) kohärenten Bildern in mehreren Bildebenen für die Extraktion von quantitativen Phaseninformationen und (ii) inkohärenten Bildern in mehreren Bildebenen für die 3D-Superauflösungsbildgebung.

**Revendications**

1. Système de microscope **caractérisé en ce qu'**il comprend un prisme optique séparateur d'image (200) adapté pour être utilisé pour l'imagerie tridimensionnelle ou de phase d'objets, ledit prisme (200) étant constitué d'au moins deux prismes parallèles plans (230, 240, 260) combinés pour former un corps solide rigide unique, les au moins deux prismes parallèles plans combinés comprenant au moins deux surfaces externes parallèles et réfléchissantes (232, 242, 262), une interface interne commune (231), parallèle auxdites surfaces (232, 242, 262) et agissant comme un séparateur de faisceau 50:50 non polarisant ; ledit prisme (200) comprenant en outre un côté d'entrée de faisceau (233) formant un angle $\beta$ par rapport à ladite interface (231) et deux côtés de sortie de faisceau (234, 244) formant un angle $\gamma$ par rapport à ladite interface (231), les épaisseurs desdits au moins deux prismes parallèles (230, 240, 260), c'est-à-dire les distances des surfaces réfléchissantes externes (232, 242, 262) de l'interface de séparateur (231), différant par $\varepsilon 2^k$ pour générer une pluralité d'images décalées latéralement sans chevauchement à partir d'un faisceau convergent entrant par le côté entrée du faisceau (233), de sorte que les images dans une pluralité de plans d'image peuvent être acquises simultanément, alors que $\varepsilon > 0$, k = 1... $m$ ; $m$ représentant le nombre de réflexions internes en retour d'un faisceau vers ladite interface (231).

2. Système de microscope selon la revendication 1, comprenant en outre au moins une lentille pour fournir le faisceau convergeant vers le côté d'entrée du faisceau (233), le prisme optique séparateur d'image (200) étant situé entre l'au moins une lentille et la pluralité de plans d'image.

3. Système de microscope selon la revendication 2, comprenant en outre un objectif de microscope (110) et une lentille de tube (120), ainsi qu'un diaphragme de champ (130) situé à un plan d'image intermédiaire et entre (i) l'objectif de microscope (110) et la lentille de tube (120), et (ii) le prisme optique séparateur d'image (200).

4. Système de microscope selon la revendication 3, comprenant en outre des lentilles achromatiques (140, 150) d'un système de relais situé entre le diaphragme de champ (130) et le prisme optique séparateur d'image (200).

5. Système de microscope selon la revendication 1, lesdits prismes (230, 240, 260) étant fixés les uns aux autres, la surface de fixation formant ladite interface (231).

6. Système de microscope selon les revendications 1 à 5, le prisme optique séparateur d'image (200) comprenant une troisième surface externe parallèle et réfléchissante (262) située à une distance, de ladite interface (231), qui diffère de la distance des deux autres surfaces externes parallèles et réfléchissantes (232, 242).

7. Système de microscope selon la revendication 6, la distance de ladite troisième surface (262) étant la plus courte par rapport aux distances des deux autres surfaces externes parallèles et réfléchissantes (232, 242).

8. Système de microscope selon la revendication 7, le prisme optique séparateur d'image (200) comprenant un prisme rhomboïde (260) qui comprend ladite troisième surface (262) et ladite une surface interne commune (231).

9. Système de microscope selon l'une quelconque des revendications précédentes, combiné avec au moins deux caméras (160, 161) orientées chacune devant un côté de sortie (234, 244).

10. Système de microscope selon l'une quelconque des revendications précédentes 1 à 8, combiné avec une seule caméra (160, 161) orientée devant un côté de sortie (234, 244) et adapté pour capturer les signaux d'au moins deux faisceaux parallèles.

11. Système de microscope selon l'une quelconque des revendications précédentes, combiné avec un cylindre de verre (170) constitué d'un matériau qui diffère du matériau du prisme, ledit cylindre de verre (170) étant positionné de manière à réduire l'aberration chromatique axiale.

12. Système de microscope selon l'une quelconque des revendications précédentes comprenant une interface dichroïque bifaciale (236).

13. Système de microscope selon l'une quelconque des revendications précédentes, le prisme optique séparateur d'image (200) comprenant un prisme à angle droit (250) pour délivrer tous les faisceaux à un côté de sortie de faisceau (234, 244).

**14.** Utilisation du système de microscope selon l'une quelconque des revendications précédentes, pour l'acquisition simultanée, (i) d'images cohérentes dans plusieurs plans d'image pour l'extraction d'informations quantitatives de phase, et (ii) d'images incohérentes dans plusieurs plans d'image pour l'imagerie 3D à super-résolution.

**Figure 1 (Prior art)**

**Figure 2**

**Figure 3**

**Figure 4**

**Figure 5**

**Figure 6**

Figure 7

Figure 8

Spot diagrams: 500-750nm wavelength, 18.4μm Airy radius, RMS radius < 5μm

Image: (0;0)mm     Image: (0;-1.15)mm     Image: (0;1.63)mm     Image: (-2.72;-1.63)mm

**Figure 9**

**Figure 10**

**Figure 11**

**Figure 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012051581 W
- US 2010231922 A
- US 2009213466 A
- US 5032004 A
- GB 2346453 A
- WO 2010042522 A
- US 2004156134 A
- DE 102009047002
- EP 0447644 A1
- US 5040872 A
- JP 3026626 B

**Non-patent literature cited in the description**

- **T. DERTINGER ; R. COLYER ; G. IYER ; S. WEISS ; J. ENDERLEIN.** Fast, background-free, 3D super-resolution optical fluctuation imaging (SOFI). *Proc. Nat. Acad. Sci. USA,* 2009, vol. 106, 22287-22292
- **T. DERTINGER ; R. COLYER ; R. VOGEL ; J. ENDERLEIN ; S. WEISS.** Achieving increased resolution and more pixels with Superresolution Optical Fluctuation Imaging (SOFI). *Opt. Express,* 2010, vol. 18, 18875-18885
- **M. R. TEAGUE.** Irradiance moments: their propagation and use for unique retrieval of phase. *J. Opt. Soc. Am.,* 1982, vol. 72, 1199-1209
- **T. E. GUREYEV ; A. ROBERTS ; K. A. NUGENT.** Phase retrieval with the transport-of-intensity equation: matrix solution with use of Zernike polynomials. *J. Opt. Soc. Am. A,* 1995, vol. 12, 1932-1941